(19)

Europäisches Patentamt

European Patent Office

Office européen des brevets

(11)  **EP 4 575 934 A1**

(12)  **EUROPEAN PATENT APPLICATION**

(43) Date of publication:
    **25.06.2025  Bulletin 2025/26**

(21) Application number: **23219576.8**

(22) Date of filing: **22.12.2023**

(51) International Patent Classification (IPC):
    **G06N 20/00** (2019.01)    **H04L 1/00** (2006.01)
    **H04L 1/1829** (2023.01)    **H04L 1/1812** (2023.01)

(52) Cooperative Patent Classification (CPC):
    **H04L 1/1819; G06N 20/00; H04L 1/0003;**
    **H04L 1/0009; H04L 1/0045; H04L 1/1845;**
    H04L 1/0026

(84) Designated Contracting States:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Designated Extension States:
    **BA**
    Designated Validation States:
    **KH MA MD TN**

(71) Applicant: **Nokia Solutions and Networks Oy**
    **02610 Espoo (FI)**

(72) Inventors:
    • **MOHAMMADI, Jafar**
      **Munich (DE)**
    • **RASSOULI, Borzoo**
      **Munich (DE)**

(74) Representative: **Nokia EPO representatives**
    **Nokia Technologies Oy**
    **Karakaari 7**
    **02610 Espoo (FI)**

(54)  **COMMUNICATING SENSITIVE DATA**

(57)  This specification discloses an apparatus and method. The method may comprise receiving a plurality of encoded data messages over a wireless channel from a transmitting node, attempting to decode the received encoded data messages and determining successful/-unsuccessful decoding of the encoded data messages. The method may also comprise, responsive to determin-ing successful decoding of a particular encoded data message, allocating the particular decoded data message to a pool associated with the transmitting node, and, responsive to determining unsuccessful decoding of a particular encoded data message, selecting a replacement data message from the pool associated with the transmitting node.

Figure 2

## Description

### Field

Example embodiments describe apparatuses and methods for communicating data. The data may comprise, but is not necessarily, sensitive data.

### Background

It is known to transmit data, which may be sensitive data, from one or more user terminals to another apparatus for performing one or more processing tasks using that data. Sensitive data may comprise data which represents information considered private or personal to a user and may include, for example, identity information, biometric information and/or health-related information. The receiving apparatus may perform one or more processing tasks, which may include machine learning tasks for training one or more machine learning models. For example, the receiving apparatus may receive the transmitted data from a plurality of user terminals and perform one or more federated learning tasks. The sensitive nature of the data may require certain pre-processing operations to be performed at the user terminals prior to transmission to maintain privacy whilst the data is transmitted over a channel to the receiving apparatus.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus, comprising means for receiving a plurality of encoded data messages over a wireless channel from a transmitting node; means for attempting to decode the received encoded data messages; means for determining successful/unsuccessful decoding of the encoded data messages; means, responsive to determining successful decoding of a particular encoded data message, for allocating the particular decoded data message to a pool associated with the transmitting node; and means, responsive to determining unsuccessful decoding of a particular encoded data message, for selecting a replacement data message from the pool associated with the transmitting node.

According to some embodiments, the apparatus may further comprise means for transmitting ACK/NACK responses to the transmitting node, respectively indicating successful/unsuccessful decoding of the encoded data messages.

According to some embodiments, the plurality of encoded data messages may include a forward error correcting code and wherein the transmitted ACK/NACK responses may respectively indicate successful/unsuccessful error detection by use of the forward error correcting code.

According to some embodiments, the plurality of encoded data messages may comprise a sequence of encoded data messages.

According to some embodiments, the means for selecting the replacement data message may be configured to select said replacement data message at random according to a predetermined probability distribution.

According to some embodiments, the predetermined probability distribution may, initially at least, be a uniform probability distribution.

According to some embodiments, the predetermined probability distribution may, initially at least, be based on a probability distribution received from the transmitting node.

According to some embodiments, the apparatus may further comprise means for: establishing a secure communications link with the transmitting node, wherein the predetermined probability distribution is received using the secure communications link.

According to some embodiments, the predetermined probability distribution may be updated based on the number of encoded data messages that have been successfully decoded during a predetermined time window.

According to some embodiments, the predetermined probability distribution may be updated in response to successfully decoding a particular encoded data message.

According to some embodiments, the predetermined time window may correspond to a predetermined number of the most-recently received encoded data messages.

According to some embodiments, at least some of the plurality of encoded data messages may include user-sensitive data.

According to some embodiments, the apparatus may further comprise means for training a computational model using a message set comprising the successfully decoded data messages and the replacement data messages associated with the transmitting node.

According to some embodiments, the apparatus may be configured to receive encoded data messages from a plurality of transmitting nodes and wherein the means for training the computational model may use a plurality of messages sets, comprising the successfully decoded data messages and the replacement data messages, respectively associated with the plurality of transmitting nodes.

According to some embodiments, the computational model may be trained to determine a network data aggregation function.

According to some embodiments, the apparatus may comprise a base station, eNB, gNB or TRP.

According to a second aspect, there is described an apparatus, comprising: means for transmitting a plurality of encoded data messages over a wireless channel to a receiving node; means for receiving ACK/NACK responses from the receiving node, respectively indicating successful/unsuccessful decoding by the receiving node of the encoded data messages; and means for, responsive to receiving a NACK response for a particular encoded data message of the encoded data messages: refraining from re-transmitting said particular encoded data message to the receiving node and, transmitting a next encoded data message of the plurality of encoded data messages to the receiving node.

According to some embodiments, the plurality of encoded data messages may comprise a sequence of encoded data messages, and wherein the next encoded data message comprises the next encoded data message of the sequence.

According to some embodiments, the plurality of encoded data messages may include a forward error correcting code and wherein the received ACK/NACK responses may respectively indicate successful/unsuccessful error detection by the receiving node by use of the forward error correcting code.

According to some embodiments, the apparatus may further comprise: means for determining a probability distribution based on the number of transmitted encoded data messages which have been successfully/unsuccessfully decoded by the receiving node; and means for transmitting the determined probability distribution to the receiving node prior to transmission of one or more other encoded data messages.

According to some embodiments, the probability distribution may be determined based at least on the number of ACK/NACK responses received from the receiving node during a predetermined time window.

According to some embodiments, the apparatus may further comprise means for: establishing a secure communications link with the receiving node, wherein the determined probability distribution is transmitted using the secure communications link.

According to some embodiments, at least some of the plurality of encoded data messages may include user-sensitive data.

According to some embodiments, the apparatus may be selectively operable in either a first mode or a second mode: wherein, in the first mode, the means for refraining from re-transmitting said one or more encoded data messages and transmitting the next encoded data message is enabled; and wherein, in the second mode, a means for re-transmitting said one or more encoded data messages in response to receiving a NACK response for said one or more encoded data messages is enabled.

According to some embodiments, the apparatus may further comprise means for determining that at least some of the plurality of encoded data messages include user-sensitive data; and wherein the apparatus may be configured to switch from the second mode to the first mode responsive to said determination.

According to some embodiments, the apparatus may comprise a user terminal.

According to a third aspect, there is described a method, comprising: receiving a plurality of encoded data messages over a wireless channel from a transmitting node; attempting to decode the received encoded data messages; determining successful/unsuccessful decoding of the encoded data messages; responsive to determining successful decoding of a particular encoded data message, allocating the particular decoded data message to a pool associated with the transmitting node; and, responsive to determining unsuccessful decoding of a particular encoded data message, selecting a replacement data message from the pool associated with the transmitting node.

According to some embodiments, the method may further comprise transmitting ACK/NACK responses to the transmitting node, respectively indicating successful/unsuccessful decoding of the encoded data messages.

According to some embodiments, the plurality of encoded data messages may include a forward error correcting code and wherein the transmitted ACK/NACK responses may respectively indicate successful/unsuccessful error detection by use of the forward error correcting code.

According to some embodiments, the plurality of encoded data messages may comprise a sequence of encoded data messages.

According to some embodiments, said replacement data message may be selected at random according to a predetermined probability distribution.

According to some embodiments, the predetermined probability distribution may, initially at least, be a uniform probability distribution.

According to some embodiments, the predetermined probability distribution may, initially at least, be based on a probability distribution received from the transmitting node.

According to some embodiments, the method may further comprise: establishing a secure communications link with the transmitting node, wherein the predetermined probability distribution is received using the secure communications link.

According to some embodiments, the predetermined probability distribution may be updated based on the number of encoded data messages that have been successfully decoded during a predetermined time window.

According to some embodiments, the predetermined probability distribution may be updated in response to successfully decoding a particular encoded data message.

According to some embodiments, the predetermined time window may correspond to a predetermined number of the most-recently received encoded data messages.

According to some embodiments, at least some of the plurality of encoded data messages may include user-sensitive data.

According to some embodiments, the method may further comprise training a computational model using a message set comprising the successfully decoded data messages and the replacement data messages associated with the transmitting node.

According to some embodiments, the method may comprise receiving encoded data messages from a plurality of transmitting nodes and wherein the computational model may be trained using a plurality of messages sets, comprising the successfully decoded data messages and the replacement data messages, respectively associated with the plurality of transmitting nodes.

According to some embodiments, the computational model may be trained to determine a network data aggregation function.

According to some embodiments, the method may be performed at a base station, eNB, gNB or TRP.

According to a fourth aspect, there is described a method, comprising: transmitting a plurality of encoded data messages over a wireless channel to a receiving node; receiving ACK/NACK responses from the receiving node, respectively indicating successful/unsuccessful decoding by the receiving node of the encoded data messages; and, responsive to receiving a NACK response for a particular encoded data message of the encoded data messages: refraining from re-transmitting said particular encoded data message to the receiving node and, transmitting a next encoded data message of the plurality of encoded data messages to the receiving node.

According to some embodiments, the plurality of encoded data messages may comprise a sequence of encoded data messages, and wherein the next encoded data message comprises the next encoded data message of the sequence.

According to some embodiments, the plurality of encoded data messages may include a forward error correcting code and wherein the received ACK/NACK responses may respectively indicate successful/unsuccessful error detection by the receiving node by use of the forward error correcting code.

According to some embodiments, the method may further comprise: determining a probability distribution based on the number of transmitted encoded data messages which have been successfully/unsuccessfully decoded by the receiving node; and transmitting the determined probability distribution to the receiving node prior to transmission of one or more other encoded data messages.

According to some embodiments, the probability distribution may be determined based at least on the number of ACK/NACK responses received from the receiving node during a predetermined time window.

According to some embodiments, the method may further comprise: establishing a secure communications link with the receiving node, wherein the determined probability distribution is transmitted using the secure communications link.

According to some embodiments, at least some of the plurality of encoded data messages may include user-sensitive data.

According to some embodiments, the method may comprise selectively operating either a first mode or a second mode: wherein, in the first mode, the method comprises said refraining from re-transmitting said one or more encoded data messages and said transmitting the next encoded data message; and wherein, in the second mode, the method comprises re-transmitting said one or more encoded data messages in response to receiving a NACK response for said one or more encoded data messages is enabled.

According to some embodiments, the method may further comprise determining that at least some of the plurality of encoded data messages include user-sensitive data; and wherein the method may be switch from the second mode to the first mode responsive to said determination.

According to some embodiments, the method may be performed by a user terminal.

According to a fifth aspect, there is provided a computer program product, comprising a set of instructions which, when executed on an apparatus, is configured to cause the apparatus to carry out a method, comprising: receiving a plurality of encoded data messages over a wireless channel from a transmitting node; attempting to decode the received encoded data messages; determining successful/unsuccessful decoding of the encoded data messages; responsive to determining successful decoding of a particular encoded data message, allocating the particular decoded data message to a pool associated with the transmitting node; and, responsive to determining unsuccessful decoding of a particular encoded data message, selecting a replacement data message from the pool associated with the transmitting node.

The fifth aspect may include any other feature mentioned with respect to the method of the third aspect.

According to a sixth aspect, there is provided a computer program product, comprising a set of instructions which, when executed on an apparatus, is configured to cause the apparatus to carry out a method, comprising: transmitting a plurality of encoded data messages over a wireless channel to a receiving node; receiving ACK/NACK responses from the receiving node, respectively indicating successful/unsuccessful decoding by the receiving node of the encoded data messages; and, responsive to receiving a NACK response for a particular encoded data message of the encoded data messages: refraining from re-transmitting said particular encoded data message to the receiving node and, transmitting a next encoded data message of the plurality of encoded data messages to the receiving node.

The sixth aspect may include any other feature mentioned with respect to the method of the fourth aspect.

According to a seventh aspect, there is described a non-transitory computer readable medium comprising program instructions stored thereon to cause the apparatus to carry out a method, comprising: receiving a plurality of encoded data messages over a wireless channel from a transmitting node; attempting to decode the received encoded data messages; determining successful/unsuccessful decoding of the encoded data messages; responsive to determining successful decoding of a particular encoded data message, allocating the particular decoded data message to a pool associated with the transmitting node; and, responsive to determining unsuccessful decoding of a particular encoded data message, selecting a replacement data message from the pool associated with the transmitting node.

The seventh aspect may include any other feature mentioned with respect to the method of the third aspect.

According to an eighth aspect, there is described a non-transitory computer readable medium comprising program instructions stored thereon to cause the apparatus to carry out a method, comprising: transmitting a plurality of encoded data messages over a wireless channel to a receiving node; receiving ACK/NACK responses from the receiving node, respectively indicating successful/unsuccessful decoding by the receiving node of the encoded data messages; and, responsive to receiving a NACK response for a particular encoded data message of the encoded data messages: refraining from re-transmitting said particular encoded data message to the receiving node and, transmitting a next encoded data message of the plurality of encoded data messages to the receiving node.

The eighth aspect may include any other feature mentioned with respect to the method of the fourth aspect.

According to a ninth aspect, there is described an apparatus comprising at least one processing core, at least one memory including computer program code, the at east one memory and the computer program code being configured to, with the at least one processing core, cause the apparatus to: receive a plurality of encoded data messages over a wireless channel from a transmitting node; attempt to decode the received encoded data messages; determine successful/unsuccessful decoding of the encoded data messages; responsive to determining successful decoding of a particular encoded data message, allocate the particular decoded data message to a pool associated with the transmitting node; and, responsive to determining unsuccessful decoding of a particular encoded data message, select a replacement data message from the pool associated with the transmitting node.

The ninth aspect may include any other feature mentioned with respect to the method of the third aspect.

According to a tenth aspect, there is described an apparatus comprising at least one processing core, at least one memory including computer program code, the at east one memory and the computer program code being configured to, with the at least one processing core, cause the apparatus to: transmit a plurality of encoded data messages over a wireless channel to a receiving node; receive ACK/NACK responses from the receiving node, respectively indicating successful/unsuccessful decoding by the receiving node of the encoded data messages; and, responsive to receiving a NACK response for a particular encoded data message of the encoded data messages: refrain from re-transmitting said particular encoded data message to the receiving node and, transmit a next encoded data message of the plurality of encoded data messages to the receiving node.

The tenth aspect may include any other feature mentioned with respect to the method of the fourth aspect.

**Drawings**

Example embodiments will be described, by way of non-limiting example, with reference to the accompanying drawings, in which:

Figure 1 is a schematic view of an example network scenario;
Figure 2 is a block diagram of a transmitting node and network node in accordance with some example embodiments;
Figure 3 is a flow diagram showing processing operations in accordance with some example embodiments;
Figure 4 is a further flow diagram showing processing operations in accordance with some example embodiments;
Figure 5A is a signal diagram useful for understanding some example embodiments;
Figure 5B is a signal diagram in accordance with some example embodiments;
Figure 6 is a graph indicating simulation results in accordance with some example embodiments;

Figure 7 is a further flow diagram showing processing operations in accordance with some example embodiments;

Figure 8 is a further signal diagram in accordance with some example embodiments;

Figure 9 is a block diagram of an apparatus that may be configured in accordance with some example embodiments; and

Figure 10 is a non-transitory medium that may store instructions which, we executed by a processor, may perform a processing in accordance with some example embodiments.

**Detailed Description**

Example embodiments relate to apparatuses and methods for communicating data, which may be sensitive data.

Sensitive data may represent information which is private or personal to a user. For example, sensitive data may comprise one or more of, for example, identity information, location information, biometric information and/or health-related information associated with one or more users.

One or more users may generate raw data using one or more associated user terminals. The raw data may include sensitive data. The user terminals may encode the raw data and possibly other data into one or more encoded data messages which are then transmitted over a channel, possible a wireless channel, to a receiving apparatus. The receiving apparatus may receive the one or more encoded data messages from one or a plurality of user terminals, decode the encoded data messages to obtain the raw data, and perform one or more processing tasks using the raw data.

The one or more processing tasks may comprise, for example, one or more machine learning and/or inference tasks. Where encoded data messages are received from a plurality of user terminals, the one or more tasks may include one or more federated learning tasks. Federated learning is a machine learning technique that involves training a model using data, usually from multiple different sources providing their own respective datasets. The respective datasets may represent one or more computational models trained locally at the plurality of user terminals. This decentralized approach differs from more traditional machine learning techniques where local datasets are used for training, and may produce more robust computational models. For example, a plurality of user terminals may participate in a federated learning campaign whereby a receiving apparatus is configured to learn a network aggregation function for performing analytics and providing insights regarding one or more network functions. These insights may in turn be used to modify one or more of the network functions to improve performance. The network functions may be core network functions and may be applicable to any wireless network, including, but not limited to, cellular networks.

So-called differential privacy (DP) methods may be used to preserve sensitive data, for example the identity of individual users, by modifying the original data in such a way that it is difficult for receiving users to infer much about the individuals. Example embodiments provide an alternative approach.

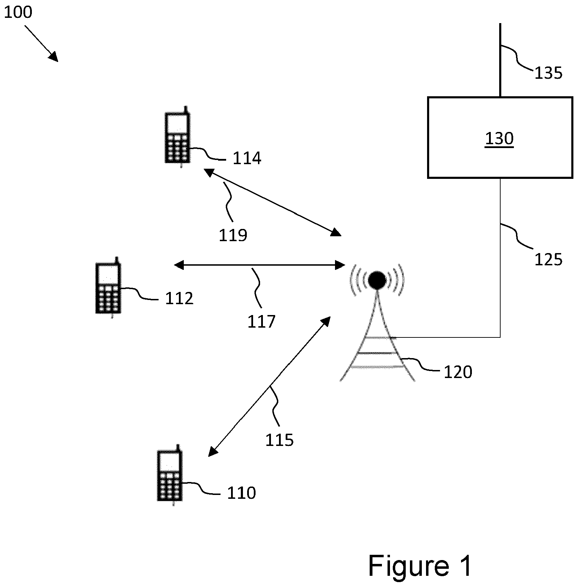

Figure 1 illustrates a network scenario useful for understanding at least some example embodiments. According to the example network scenario of Figure 1, there may

be a cellular communication system 100, which comprises first to third UEs 110, 112, 114, a wireless network node 120 and core network element 130. The first to third UEs 110, 112, 114 may be connected to the wireless network node 120 via respective channels (air interfaces) 115, 117, 119 and the wireless network node 120 may be further connected to the core network element 130 via a wired interface 125. The respective channels 115, 117, 119 may be intrinsically noisy, for example due to thermal noise, which may cause errors to appear in data messages transmitted over said channels.

The UE 110 may comprise, for example, a smartphone, a cellular phone, a Machine-to-Machine, M2M, node, Machine-Type Communications, MTC, node, RedCap UE (Reduced Capability UE) node, an Internet of Things, IoT, node, a car telemetry unit, a laptop computer, a tablet computer or, indeed, any kind of suitable wireless terminal, like a relay. The wireless network node 120 may be considered as a serving node for the UE 110 and one cell of the wireless network node 120 may be a serving cell for the UE 110.

The respective channels 115, 117, 119 between the first to third UEs 110, 112, 114 and the wireless network node 120 may be configured in accordance with a Radio Access Technology, RAT, which both the UE 110 and the wireless network node 120 are configured to support. Examples of cellular RATs include Long Term Evolution, LTE, New Radio, NR, which may also be known as fifth generation, 5G, radio access technology and MulteFire. For example, in the context of LTE, the wireless network node 120 may be referred to as an eNB while wireless network node 120 may be referred to as a gNB in the context of 5G/NR. In some example embodiments, the wireless network node 120 may be referred to as a Transmission and Reception Point, TRP, or may control multiple TRPs that may be co-located or non-co-located. In some example embodiments, the wireless network node 120 may be a relay.

In any case, example embodiments of the present disclosure are not restricted to any particular wireless technology.

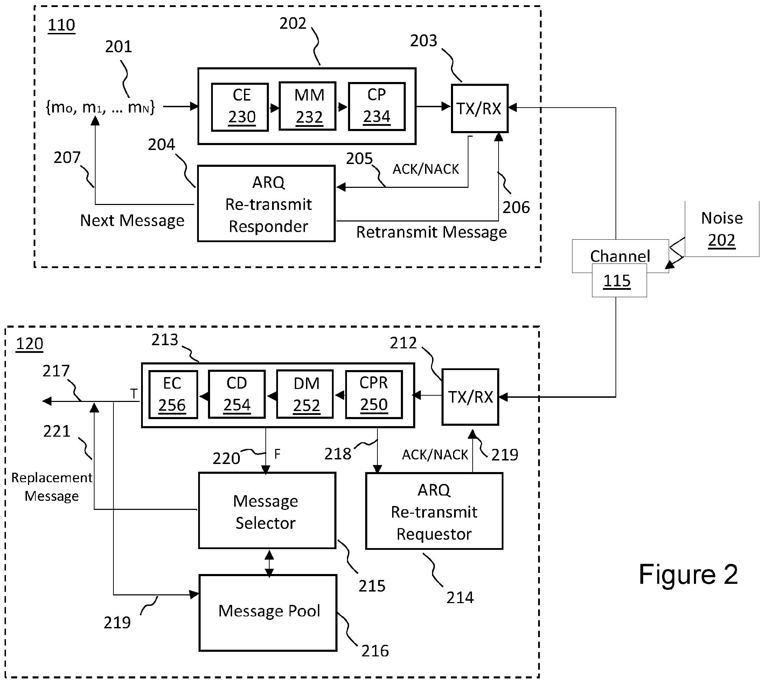

Figure 2 is a block diagram showing functional components of the first UE 110 and the wireless network node 120 of Figure 1, when in wireless communication via the channel 115. As indicated, the channel 115 may be subjected to channel noise 202, particularly thermal noise, which may introduce one or more bit-wise errors in encoded data messages transmitted via the channel.

The same or similar functional components may appear in one or more of the second and third UEs 112, 114.

One way to reduce the effect of noise, whether due to the channel noise 202 and/or other noise introduced by other components, is to increase the power of the transmitted signal, which is only a partial solution due to practical constraints. Another method is for the transmitting node (i.e., the first UE 110 in the above example) to add a forward error correction (FEC) code, usually a plurality of redundant / parity bits, to the original data message prior to encoding. The transmitting and receiving mode may be configured to use error control methods, such as the Automatic Repeat Request (ARQ) method, whereby the receiving node uses the FEC code to detect and correct up to a certain number of erroneous bits. If the receiving node can decode the received encoded message, whether by detecting no errors or by correcting the erroneous bits, it transmits a response to the transmitting node indicating successfully decoding, usually referred to as an acknowledgement (ACK) response. The transmitting node may then encode and transmit a next data message to the receiving node. If the receiving node cannot decode the received encoded message, whether due to their being too many erroneous bits or otherwise, it transmits to the receiving node a response indicating unsuccessful decoding, usually referred to as a negative acknowledgement (NACK) response. The transmitting node may then re-transmit the same data message to the receiving node. This may be performed a predetermined number of times until either an ACK response is received, or a predetermined number of re-transmissions is reached.

The above sequence of error control signals and responses may occur in what may be termed a conventional mode of operation.

In accordance with some example embodiments, the first UE 110 and the wireless network node 120 may be configured to use error control signals and responses in a different way, using a so-called privacy mode of operation. The privacy mode of operation makes use of the intrinsic randomness of the channel noise 202 and possibly other error sources (e.g., errors due to hardware imperfections) to maintain privacy over the raw data which may include sensitive data. The abovementioned DF methods are not required at the transmitting and receiving ends and so the process is less complex.

In accordance with some example embodiments, the first UE 110 and the wireless network node 120 may switch between the conventional and privacy modes of operation.

For example, a switch between said conventional and privacy modes may be initiated by a user and/or automatically if the first UE 110 detects that at least some raw data to be transmitted includes sensitive data.

Referring to Figure 2, the first UE 110 is configured to provide a set of data messages 201 for transmission to the wireless network node 120.

The set of data messages 201 may represent any form of information and may include sensitive data pertaining to an associated user of the first UE 110.

The set of data messages 201 may comprise a sequence of (raw) data messages $\{m_0, m_1, m_N\}$ to be transmitted in a particular order, one after the other, depending on the ACK/NACK responses from the wireless network node 120.

The UE 110 may comprise an encoder 202, a transceiver 203 and an ARQ re-transmit responder 204.

The transceiver 203 may be connected to an antenna or antenna array (not shown). The transceiver 203 is shown as one module but may alternatively be provided as separate transmitter and receiver modules.

The encoder 202 may be configured to encode a next-in-sequence data message using one or more encoding methods depending on the type of network. For example, the encoder 202 may comprise a channel encoder 230, a modulation/mapper 232 and a pilot or control pilot insertion module 234.

In this case, the channel encoder 230 may be configured to add FEC to the data message to form a codeword. The codeword may then be modulated or mapped by the modulation/mapper 323 according to a particular modulation scheme, e.g., Quadrature Amplitude Modulation (QAM) or Orthogonal Frequency Division Multiplexing (OFDM), to produce complex-modulation symbols. The pilot or control pilot insertion module 234 may then add one or more pilot or control pilot bits to the complex-modulation symbols. The resulting encoded data message is then transmitted by the transceiver 203 to the wireless network node 120 over the channel 115.

The ARQ re-transmit responder 204 may be configured to receive ACK/NACK responses from the wireless network node 120 via a signal line 20 with the transceiver 203.

In response to an ACK response, the ARQ re-transmit responder 204 may cause, via a signal line 207, a next data message of the set 201 to be encoded and transmitted.

In response to a NACK response, the ARQ re-transmit responder 204 is configured to respond depending on the mode of operation. In the conventional mode of operation, the ARQ re-transmit responder 204 may cause the encoded message to be re-transmitted, e.g. via a signal line 206. In the privacy mode of operation, according to example embodiments, the ARQ re-transmit responder 204 may refrain from causing the encoded message to be re-transmitted. Rather, the next data message of the set of data messages 201 may be encoded and transmitted.

The above process may repeat for other data messages of the set of data messages 201 in the privacy mode of operation.

The wireless network node 120 may comprise a transceiver 212, a decoder 213, an ARQ re-transmit requestor 214, a message selector 215 and a message pool 216.

The transceiver 212 may be connected to an antenna or antenna array (not shown). The transceiver 212 is shown as one module but may alternatively be provided as separate transmitter and receiver modules.

The decoder 213 may perform the inverse operations as the encoder 202 of the first UE 110.

For example, the decoder 203 may comprise a pilot or control pilot removal module 250, a demodulator/demapper 252, a channel decoder 254 and an error detection and correction module 256. The channel decoder 254 may output a decoded codeword, which comprises redundant bits of FEC code. The error detection and correction module 256 is configured to use the redundant bits of the decoded codeword to detect erroneous bits in the codeword and then attempts to correct said errors.

If erroneous bits can be corrected, the encoded data message is considered detected (successfully decoded) and the decoded data message may be provided as output on a line 217 to some later function, e.g., to storage on one or more memories or to a processing function which acts on said data messages.

According to some example embodiments, when the wireless network node 120 is in the privacy mode of operation, the decoded data message may be provided to the message pool 216.

The message pool 216 may be associated with the first UE 110 or its associated user. Other successfully decoded data messages from, for example, the second and third UEs 112, 114 may be provided to respective other messages pools, not shown. The message pool 216 may comprise any suitable means by which such successfully decoded messages can be stored and/or accessed. For example, the message pool 216 may comprise one or more memories, one or more memory partitions and/or one or more memory addresses where the successfully decoded messages are stored. Alternatively, links or pointers to the successfully decoded messages, however stored, may be used.

If error correction fails, then the encoded data message is considered not detected (unsuccessfully decoded) and the decoder refrains from outputting said message on line 217.

According to some example embodiments, a fail (F) signal may be output on a line 220 to the message selector 215.

The message selector 215 may be configured to select a replacement data message from the message pool 216.

The message selector 215 may then provide this replacement data message via a line 221 as output on line 217, i.e., in place of the unsuccessfully decoded message.

Further details as to how the message selector 215 may select replacement data messages from the message pool 216 are described below.

The successful/unsuccessful decoded status may be signaled via a line 218 to the ARQ re-transmit requestor 214 which may responsively transmit an ACK/NACK response via a line 219 to the first UE 110 by means of the transceiver 212.

It will be appreciated from the above description that a NACK response, received by the first UE 110 operating in the privacy mode of operation, will not re-transmit the same encoded data message but instead transmits the next data message of the set of data messages 201.

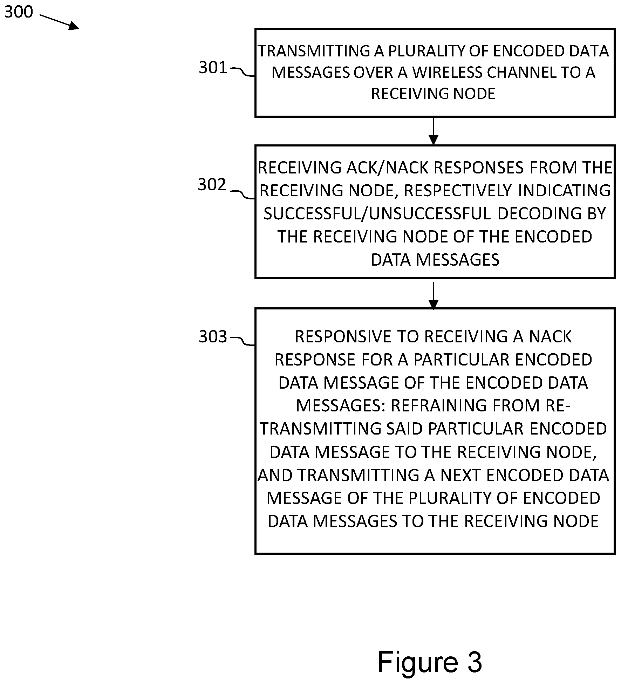

Figure 3 is a flow diagram indicating operations 300 according to one or more other example embodiments. The operations 300 relate to those that may be performed by a transmitting node, such as by one or more of the first to third UEs 110, 112, 113 in the above examples.

The operations may be performed in hardware, software, firmware or a combination thereof. For example, the operations may be performed individually, or collectively, by a means, wherein the means may comprise at least one processor and at least one memory storing instructions that, when executed by the at least one processor, cause the performance of the operations.

A first operation 401 may comprise transmitting a plurality of encoded data messages over a wireless channel to a receiving node.

A second operation 402 may comprise receiving ACK/NACK responses from the receiving node, respectively indicating successful/unsuccessful decoding by the receiving node of the encoded data messages.

A third operation 303 may comprise, responsive to receiving a NACK response for a particular encoded data message of the encoded data messages:

- refraining from re-transmitting said particular encoded data message to the receiving node; and
- transmitting a next encoded data message of the plurality of encoded data messages to the receiving node.

In some example embodiments, the plurality of encoded data messages may comprise a sequence of encoded data messages, wherein the next encoded data message comprises the next encoded data message of the sequence.

In some example embodiments, the plurality of encoded data messages may include an FEC and the received ACK/NACK responses may respectively indicate successful/unsuccessful detection (successful decoding) by the receiving node by use of, for example, FEC.

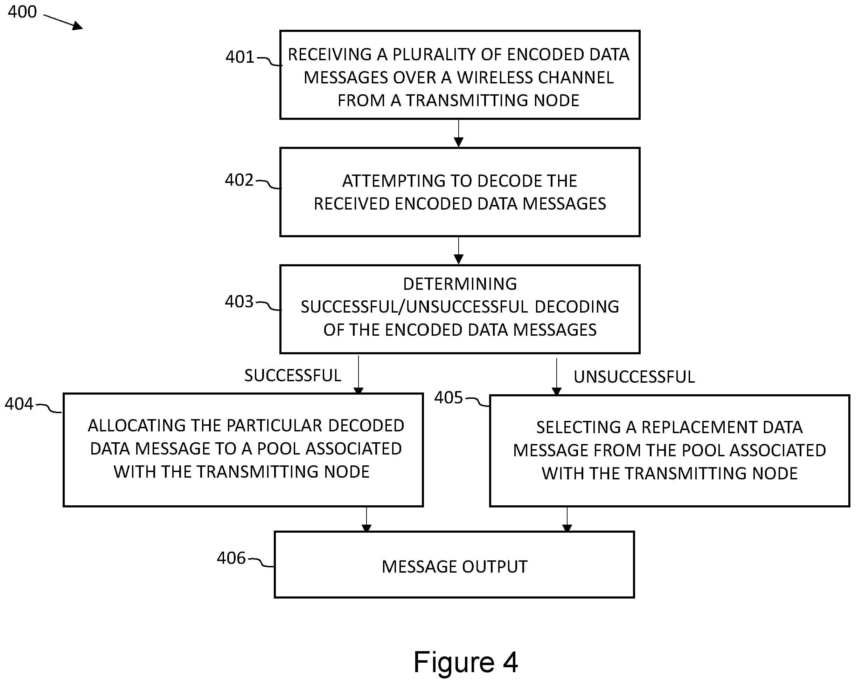

Figure 4 is a flow diagram indicating operations 400 according to one or more other example embodiments. The operations 400 relate to those that may be performed by a receiving node, which may be the wireless network node 120 in the above examples. The operations may be performed in hardware, software, firmware or a combination thereof. For example, the operations may be performed individually, or collectively, by a means, wherein the means may comprise at least one processor and at least one memory storing instructions that, when executed by the at least one processor, cause the performance of the operations.

A first operation 401 may comprise receiving a plurality of encoded data messages over a wireless channel from a transmitting node.

A second operation 402 may comprise attempting to decode the received encoded data messages.

A third operation 403 may comprise determining successful/unsuccessful decoding of the encoded data messages.

A fourth operation 404 may comprise, responsive to determining successful decoding of a particular encoded data message, allocating the particular decoded data message to a pool associated with the transmitting node.

A fifth operation 405 may comprise, responsive to determining unsuccessful decoding of a particular encoded data message, selecting a replacement data message from the pool associated with the transmitting node.

A sixth operation 406 may comprise outputting the successfully decoded or replacement data message.

In some example embodiments, other operations may include transmitting ACK/NACK responses to the transmitting node, respectively indicating successful/unsuccessful decoding of the encoded data messages. In some example embodiments, the plurality of encoded data messages may include a FEC code and wherein the transmitted ACK/NACK responses may respectively indicate successful/unsuccessful error detection (successful decoding) by use of the FEC code. In some example embodiments, the plurality of encoded data messages may comprise a sequence of encoded data messages.

Regarding the fifth operation 405, the selecting of a replacement data message from the pool may be performed as follows, for example with reference to the message selector 215 and message pool 216 shown in Figure 2.

It follows that at least the intrinsic noise of the channel 115 is used to maintain data privacy without the need for initial obfuscation, as is the case for DP methods.

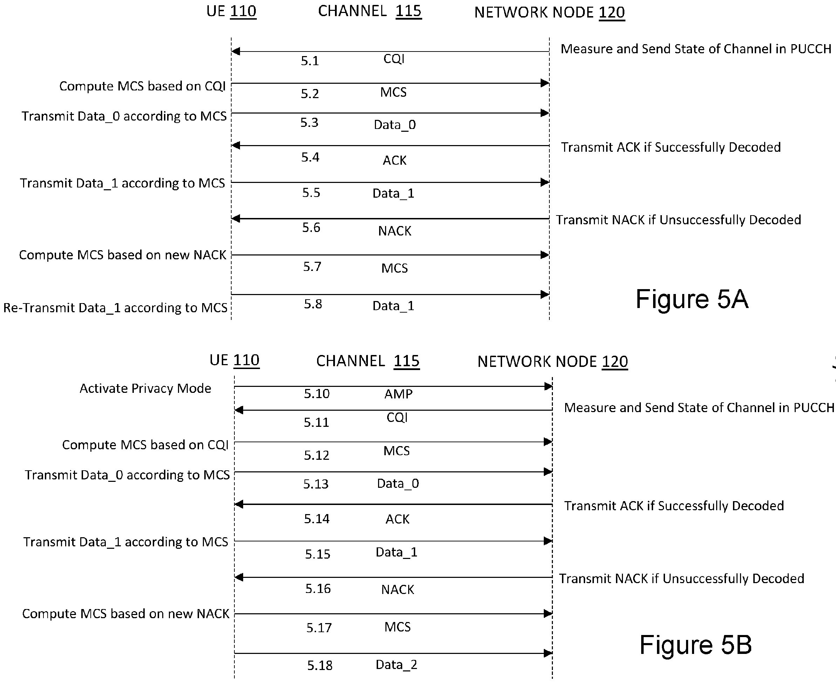

Figures 5A and 5B show example signaling according over the channel 115 to the respective conventional and privacy modes of operation.

Referring to Figure 5A, the network node 120 may in a first operation 5.1 measure and send a state of the channel 115 in a Physical Uplink Control Channel (PUCCH) message which comprises a Channel Quality Indication (CQI). The first UE 110 may in a second operation 5.2 responsively compute a Modulation and Coding Scheme (MCS) based on the CQI which it transmits to the network node 120. The first UE 110 may then in a third operation 5.3 transmit a first data message, Data_0, according to the computed MCS. The network node 120 may in a fourth operation 5.4 transmit an ACK message if Data_0 is successfully decoded. The first UE 110 may then in a fifth operation 5.5 transmit a second data message, Data_1, according to the MCS. The network node 120 may in a sixth operation 5.6 transmit a NACK message if Data_1 is unsuccessfully decoded. The first UE 110 may then in a seventh operation 5.7 compute the MCS based on the NACK message. The first UE 110 may then in an eighth operation 5.8 re-transmit the second data message, Data_1, according to the MCS.

Referring to Figure 5B, in accordance with some example embodiments, the UE 110 may in a first operation 5.10 activate the privacy mode of operation, for example by transmitting a signal "Activate Mode Privacy" (AMP) to the network node 120. Second to seventh operations 5.11 - 5.16 are equivalent to the first to sixth operations 5.1 - 5.6 described above in relation to Figure 5A. However, responsive to a received NACK message in the seventh operation 5.16 the UE 110 in an eighth operation 5.17 computes the MCS based on the NACK message and in a ninth operation 5.18 transmits a next, third data message, Data_2, instead of re-transmitting the second data message, Data_1.

The above signaling is by way of example only, and other example embodiments may use other signaling for the same purpose.

In LTE and 5G, a typical block error rate (BLER) is targeted below 0.1 for conventional transmissions. More specifically, in Enhanced Mobile Broadband (eMBB) communication the HARQ system (along with link adaptation) may keep the long term average BLER at approximately 0.1. This is done by use of an Outer Loop Link Adaptation (OLLA) algorithm. According to 3GPP TS38.321, the input is either 6-10 bits for Low Density Parity Check (base graph 2) or 22 bits for LDPC (base graph 1.) This means that around 10% of transport blocks will fail and a NACK message will be issued to request a re-transmission.

Example embodiments described herein are configured such that whenever the decoder, e.g. the decoder 213 described above, fails to decode a message, the network node 110 selects a message among the message pool, which selection may be random according to a probability distribution $\pi$ to be described below. The first UE 120, on the other hand, does not re-transmit the failed data message upon receipt of a NACK message and continues to transmit new data messages. The first UE 120 may however use the NACK message to track the level of privacy that is provided by counting the number of NACK messages received.

Returning to Figure 4 in combination with Figure 2, the fifth operation 406 of selecting by the message selector 215 a replacement data message from the message pool 216 may be performed in a certain randomized way.

For context, it is possible to compute a privacy loss ($\varepsilon$) based on a message set size, BLER, and randomized selection as follows.

When the network node 120 unsuccessfully decodes a message, it may select the replacement data message at random according to a probability distribution. The optimal probability distribution to maximize the reliability of the transmission is the uniform distribution, which is justified by noting the fact that a uniform "guess" minimizes the maximum error probability, where the maximum is over all the message distributions. Therefore, whenever a NACK message is issued by the network node 120, a replacement data message is uniformly selected by the message selector 215 from the message pool 216.

Let $m_0, m_1, \ldots, m_M$ denote the set of data messages 201 of size $M$ to be transmitted over the channel 115 in a differentially private (DP) way. These messages could be the outcome of counting queries applied to datasets of size $M$. Since two neighboring datasets may differ in only one entry, e.g. the data of an individual, let their corresponding counting queries differ by, at most, one. As a result, the neighboring constraint in the definition of DP directly maps to the neighboring of the messages, e.g., $m_0$ and $m_2$ are the neighbors of $m_1$.

Let $p$ denote the BLER of this transmission and $\zeta$ denote the undetected error probability, which is the probability that an error occurs in a specific pattern without being detected at the network node 120. Thanks to, for example, CRC parity bits appended to the message, the value of $\zeta$ is small (estimated as $\leq 10^{-6}$).

Whenever an error is detected, the network node 120 may pick a message from the message pool 216 at random. More specifically, the network node may uniformly select $m_i$ for $i = 0,1,2, \ldots, M$.

As a result, we have the following transition probabilities:

$$Pr\{m_j \text{ received } | m_i \text{ transmitted}\} = \frac{p}{M} + f_{j,i}(\zeta) \ , \ j \neq i.$$

In the above, the first term ($\frac{p}{M}$) is due to the detected error followed by uniform selection from the message pool 216, and the second term ($f_{j,i}(\zeta) \leq \zeta$) is a very small probability as a function of the undetected error probability.

We also have:

$$Pr\{m_i \text{ received} | m_i \text{ transmitted}\} = 1 - p - \zeta + \frac{p}{M}$$

which is the probability of successful message transmission. The term $1 - p - \zeta$ corresponds to correctable errors and the term $\frac{p}{M}$ corresponds to the correct selection of the transmitted message.

To analyze the amount of privacy which example embodiments provides, without the need for special precoding such as in DP methods, we proceed as follows.

A mapping from the set of data messages 210 to itself is $\varepsilon$-differentially private if:

$$Pr\{m_i \text{ received} | m_j \text{ transmitted}\} \leq e^{\varepsilon} . Pr\{m_i \text{ received} | m_k \text{ transmitted}\}$$

for all $i, j, k \in \{1,2, \ldots, M\}$ and $|j - k| = 1$, which is the adjacency constraint used in DP methods.

Therefore, we have:

$$\varepsilon = \ln \max_{i,j,k:|j-k|=1} \frac{p(m_i \mid m_j)}{p(m_i \mid m_k)}$$

where $Pr\{m_i \text{ received} | m_j \text{ transmitted}\}$ is written in short form as $p(m_i \mid m_j)$.

We may then fix two adjacent symbols $m_j, m_{j+1}$. The output of the mapping (the received message) could be $m_j$ or $m_{j+1}$ or neither of them.

Writing the ratio of the transition probabilities in these three cases, it can be readily verified that:

$$\varepsilon \leq \ln \frac{1 - p - \zeta + \frac{p}{M}}{\frac{p}{M}} \leq \ln \left( \frac{M}{p} + 1 - M \right)$$

As a result, in a setting with message size $M$ and BLER $p$, example embodiments may guarantee $\varepsilon$ (differential privacy) with:

$$\varepsilon = \ln \left( \frac{M}{p} + 1 - M \right).$$

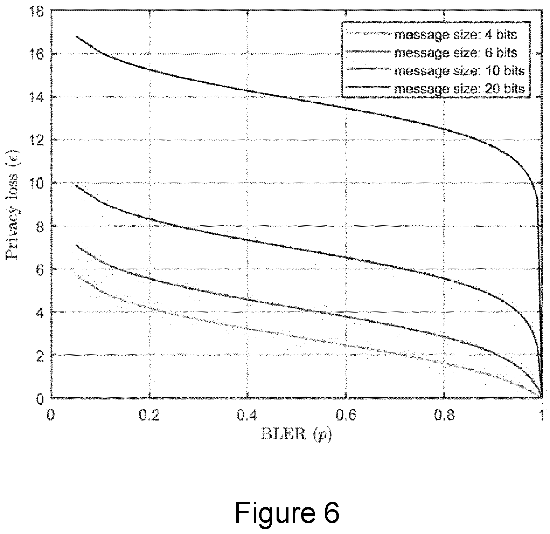

Figure 6 is a graph illustrating measured privacy loss ($\varepsilon$) with BLER for four different data message sizes.

Accordingly, it is seen that knowledge of the input data distribution can be used to improve the privacy-utility trade-off. In other words, for the same amount of privacy provided we can attain a greater utility e.g., to use the data better for inference, training and detection purposes at the network node 120..

For this purpose, the network node 120 or an associated other device may estimate a probability distribution, for example a probability mass function (PMF), of the input data distribution based upon correctly decoded messages.

In this way, the network node 120 may update its "belief" over the input data distribution as the data transmission proceeds.

After some observed data, the network node 120 may have a more refined PMF to select replacement data messages from in the fifth operation 405.

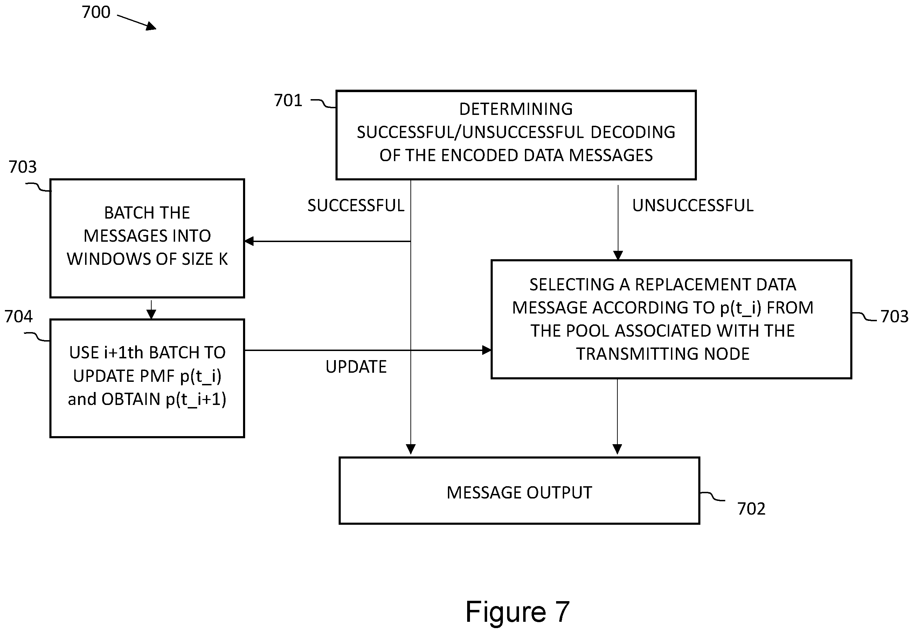

Figure 7 is a flow diagram indicating operations 700 according to some example embodiments which build on those described in relation to Figure 4.

A first operation 701 corresponds with the third operation 401 described in relation to Figure 4, i.e., determining successful or unsuccessful decoding of encoded data messages.

The data message, if successfully decoded, may be output in a second operation 702, which corresponds with the sixth operation 406 described in relation to Figure 4.

The data message, if unsuccessfully decoded, is not used and a third operation 703 of selecting a replacement message according to a PMF, p(t_i), is performed.

In the case that the data message is successfully decoded, it may be allocated to a pool associated with the transmitting node; this may involve a sub-operation 703 of batching the successfully decoded messages into windows or batches of size K (an appropriate design parameter) and a sub-operation 704 of using the next (i+1th) batch to update a current PMF, p(t_i), i.e., so that p(t_i) becomes p(t_i+1).

Initially, the network node 120 may assume a uniform distribution which gets updated, as in the above sub-operations, as more data messages are successfully decoded.

Let $\alpha_1, \alpha_2, \dots, \alpha_M$ denote the estimated mass probabilities at the network node 120. Selecting a replacement data message according to this estimate results in $\varepsilon$-differential privacy with:

$$\epsilon = \ln \left( 1 + \frac{1 - p}{p . \min_i \alpha_i} \right)$$

If there is no PMF estimation, and the messages are selected uniformly, i.e., $\alpha_i = \frac{1}{M}$, then the previous result will be obtained.

In some example embodiments, a transmitting node, such as one or more of the first to third UEs 110, 112, 113 may estimate the PMF based on the number of ACK messages it has receive and may transmit it to the network node 120. This may involve establishing a secure line, e.g. a dedicated channel, between the transmitting node and the network node 120 over which the PMF will be transmitted.

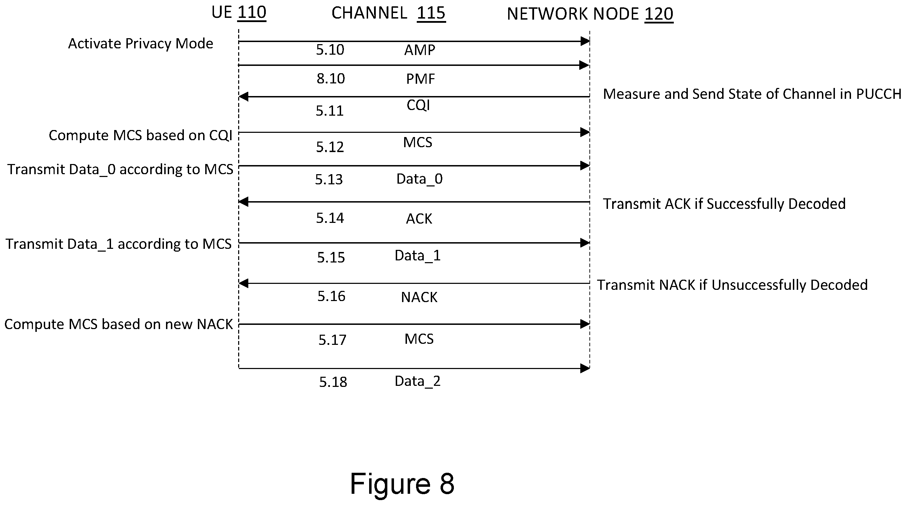

Figure 8 shows example signaling for this example. Figure 8 is identical to Figure 5B save for an additional signaling 8.10 of the estimated PMF from the first UE 110 to the network node 120.

## Example Apparatus

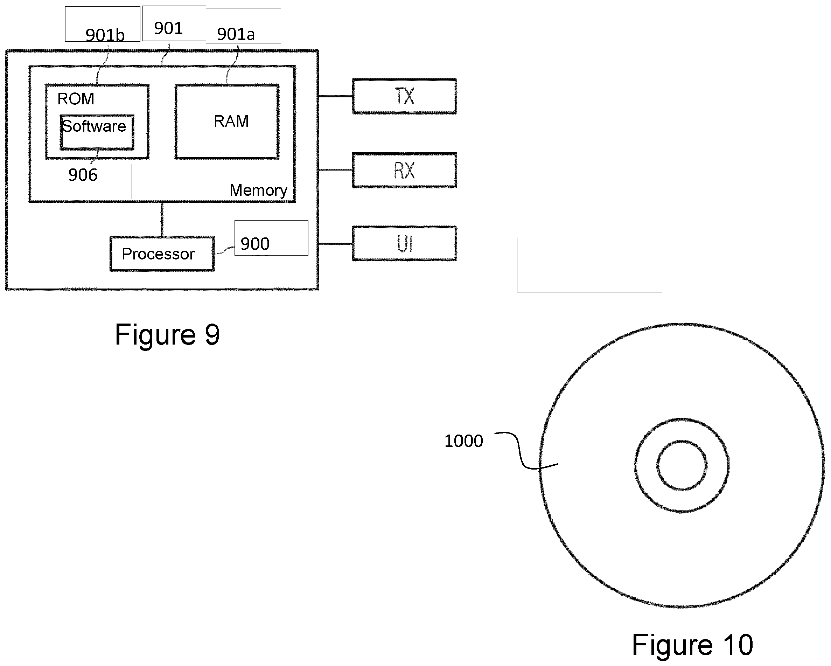

FIG. 9 shows an apparatus according to some example embodiments. The apparatus may be configured to perform the operations described herein, for example operations described with reference to any disclosed process. The apparatus comprises at least one processor 900 and at least one memory 901 directly or closely connected to the processor. The memory 901 includes at least one random access memory (RAM) 901a and at least one read-only memory (ROM) 901b. Computer program code (software) 906 is stored in the ROM 901b. The apparatus may be connected to a transmitter (TX) and a receiver (RX). The apparatus may, optionally, be connected with a user interface (UI) for instructing the apparatus and/or for outputting data. The at least one processor 900, with the at least one memory 901 and the computer program code 906 are arranged to cause the apparatus to at least perform at least the method according to any preceding process, for example as disclosed in relation to the flow diagram of FIG. 4 and related features thereof.

FIG. 10 shows a non-transitory media 1000 according to some embodiments. The non-transitory media 1000 is a computer readable storage medium. It may be e.g. a CD, a DVD, a USB stick, a blue ray disk, etc. The non-transitory media 1000 stores computer program instructions, causing an apparatus to perform the method of any preceding process for example as disclosed in relation to the flow diagram of FIG. 4 and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

**Claims**

1.  An apparatus, comprising:

    means for receiving a plurality of encoded data messages over a wireless channel from a transmitting node;
    means for attempting to decode the received encoded data messages;
    means for determining successful/unsuccessful decoding of the encoded data messages;
    means, responsive to determining successful decoding of a particular encoded data message, for allocating the particular decoded data message to a pool associated with the transmitting node; and
    means, responsive to determining unsuccessful decoding of a particular encoded data message, for selecting a replacement data message from the pool associated with the transmitting node.

2.  The apparatus of claim 1, further comprising:
    means for transmitting ACK/NACK responses to the transmitting node, respectively indicating successful/unsuccessful decoding of the encoded data messages.

3.  The apparatus of claim 2, wherein the plurality of encoded data messages include a forward error correcting code and wherein the transmitted ACK/NACK responses respectively indicate successful/unsuccessful error detection by use of the forward error correcting code.

4.  The apparatus of any preceding claim, wherein the plurality of encoded data messages comprises a sequence of encoded data messages.

5.  The apparatus of any preceding claim, wherein the means for selecting the replacement data message is configured to select said replacement data message at random according to a predetermined probability distribution.

6. The apparatus of claim 5, wherein the predetermined probability distribution is, initially at least, a uniform probability distribution, or wherein the predetermined probability distribution is, initially at least, based on a probability distribution received from the transmitting node.

7. The apparatus of claim 5 or claim 6, wherein the predetermined probability distribution is updated based on the number of encoded data messages that have been successfully decoded during a predetermined time window or wherein the predetermined probability distribution is updated in response to successfully decoding a particular encoded data message.

8. The apparatus of claim 7, wherein the predetermined time window corresponds to a predetermined number of the most-recently received encoded data messages.

9. The apparatus of any preceding claim, wherein at least some of the plurality of encoded data messages include user-sensitive data.

10. The apparatus of any of any preceding claim, wherein the apparatus comprises a base station, eNB, gNB or TRP.

11. An apparatus, comprising:

    means for transmitting a plurality of encoded data messages over a wireless channel to a receiving node;
    means for receiving ACK/NACK responses from the receiving node, respectively indicating successful/unsuccessful decoding by the receiving node of the encoded data messages; and
    means for, responsive to receiving a NACK response for a particular encoded data message of the encoded data messages:

        refraining from re-transmitting said particular encoded data message to the receiving node and,
        transmitting a next encoded data message of the plurality of encoded data messages to the receiving node.

12. The apparatus of claim 11, wherein the plurality of encoded data messages comprises a sequence of encoded data messages, and wherein the next encoded data message comprises the next encoded data message of the sequence.

13. The apparatus of claim 11 or claim 12, wherein the plurality of encoded data messages include a forward error correcting code and wherein the received ACK/NACK responses respectively indicate successful/unsuccessful error detection by the receiving node by use of the forward error correcting code.

14. A method, comprising:

    receiving a plurality of encoded data messages over a wireless channel from a transmitting node;
    attempting to decode the received encoded data messages;
    determining successful/unsuccessful decoding of the encoded data messages;
    responsive to determining successful decoding of a particular encoded data message, allocating the particular decoded data message to a pool associated with the transmitting node; and,
    responsive to determining unsuccessful decoding of a particular encoded data message, selecting a replacement data message from the pool associated with the transmitting node.

15. A method, comprising:

    transmitting a plurality of encoded data messages over a wireless channel to a receiving node;
    receiving ACK/NACK responses from the receiving node, respectively indicating successful/unsuccessful decoding by the receiving node of the encoded data messages; and
    responsive to receiving a NACK response for a particular encoded data message of the encoded data messages:

        refraining from re-transmitting said particular encoded data message to the receiving node and,
        transmitting a next encoded data message of the plurality of encoded data messages to the receiving node.

Figure 1

Figure 2

Figure 3

400

401 — RECEIVING A PLURALITY OF ENCODED DATA MESSAGES OVER A WIRELESS CHANNEL FROM A TRANSMITTING NODE

402 — ATTEMPTING TO DECODE THE RECEIVED ENCODED DATA MESSAGES

403 — DETERMINING SUCCESSFUL/UNSUCCESSFUL DECODING OF THE ENCODED DATA MESSAGES

SUCCESSFUL

UNSUCCESSFUL

404 — ALLOCATING THE PARTICULAR DECODED DATA MESSAGE TO A POOL ASSOCIATED WITH THE TRANSMITTING NODE

405 — SELECTING A REPLACEMENT DATA MESSAGE FROM THE POOL ASSOCIATED WITH THE TRANSMITTING NODE

406 — MESSAGE OUTPUT

Figure 4

EP 4 575 934 A1

UE **110**  CHANNEL **115**  NETWORK NODE **120**

| | 5.1 | CQI | Measure and Send State of Channel in PUCCH |
| Compute MCS based on CQI | 5.2 | MCS | |
| Transmit Data_0 according to MCS | 5.3 | Data_0 | |
| | 5.4 | ACK | Transmit ACK if Successfully Decoded |
| Transmit Data_1 according to MCS | 5.5 | Data_1 | |
| | 5.6 | NACK | Transmit NACK if Unsuccessfully Decoded |
| Compute MCS based on new NACK | 5.7 | MCS | |
| Re-Transmit Data_1 according to MCS | 5.8 | Data_1 | |

## Figure 5A

UE **110**  CHANNEL **115**  NETWORK NODE **120**

| Activate Privacy Mode | 5.10 | AMP | |
| | 5.11 | CQI | Measure and Send State of Channel in PUCCH |
| Compute MCS based on CQI | 5.12 | MCS | |
| Transmit Data_0 according to MCS | 5.13 | Data_0 | |
| | 5.14 | ACK | Transmit ACK if Successfully Decoded |
| Transmit Data_1 according to MCS | 5.15 | Data_1 | |
| | 5.16 | NACK | Transmit NACK if Unsuccessfully Decoded |
| Compute MCS based on new NACK | 5.17 | MCS | |
| | 5.18 | Data_2 | |

## Figure 5B

Figure 6

EP 4 575 934 A1

Figure 7

UE <u>110</u>　　　　CHANNEL <u>115</u>　　　NETWORK NODE <u>120</u>

Activate Privacy Mode

| 5.10 | AMP |
| 8.10 | PMF |

Measure and Send State of Channel in PUCCH

| 5.11 | CQI |

Compute MCS based on CQI

| 5.12 | MCS |

Transmit Data_0 according to MCS

| 5.13 | Data_0 |

Transmit ACK if Successfully Decoded

| 5.14 | ACK |

Transmit Data_1 according to MCS

| 5.15 | Data_1 |

Transmit NACK if Unsuccessfully Decoded

| 5.16 | NACK |

Compute MCS based on new NACK

| 5.17 | MCS |

| 5.18 | Data_2 |

Figure 8

Figure 9

Figure 10

Europäisches
Patentamt

European
Patent Office

Office européen
des brevets

# EUROPEAN SEARCH REPORT

Application Number

EP 23 21 9576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/220537 A1 (NOKIA SHANGHAI BELL CO LTD [CN] ET AL.) 5 November 2020 (2020-11-05) | 1-4,9-15 | INV. G06N20/00 H04L1/00 |
| A | * paragraphs [0049], [0068], [0064], [0063]; figures 2,4 * | 5-8 | H04L1/1829 H04L1/1812 |
| A | QIN WENJING ET AL: "FedGR: A Lossless-Obfuscation Approach for Secure Federated Learning", 2021 IEEE GLOBAL COMMUNICATIONS CONFERENCE (GLOBECOM), IEEE, 7 December 2021 (2021-12-07), pages 1-6, XP034074329, DOI: 10.1109/GLOBECOM46510.2021.9686029 [retrieved on 2022-01-18] * the whole document * | 1-15 | |

| | |
|---|---|
| | **TECHNICAL FIELDS SEARCHED (IPC)** |
| | H04L G06N |

The present search report has been drawn up for all claims

| Place of search | Date of completion of the search | Examiner |
|---|---|---|
| The Hague | 27 May 2024 | Marjanovic, Djordje |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 9576

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2024

| Patent document cited in search report | Publication date | Patent family member(s) | Publication date |
|---|---|---|---|
| WO 2020220537 A1 | 05-11-2020 | CN 113767581 A<br>WO 2020220537 A1<br>WO 2020221963 A1 | 07-12-2021<br>05-11-2020<br>05-11-2020 |

EPO FORM P0459

For more details about this annex : see Official Journal of the European Patent Office, No. 12/82